# EUROPÄISCHE PATENTANMELDUNG

(11) **EP 0 666 054 A1**
(43) Veröffentlichungstag der Anmeldung: **09.08.1995**
(21) Anmeldenummer: 95101117.0
(22) Anmeldetag: 27.01.1995
(51) Int. Cl.: A61B 1/04

(54) **Endoskopisches Instrument**

(30) Priorität: 07.02.1994 DE 4403566
(71) Anmelder: Richard Wolf GmbH, D-75438 Knittlingen (DE)
(72) Erfinder: Hipp, Klaus-Peter, D-75015 Bretten (DE); Wilhelm, Peter, D-75446 Wiernsheim-Pinache (DE)
(74) Vertreter: Vollmann, Heiko, Dipl.-Ing.

(57) **Zusammenfassung**

Die Vorrichtung dient zum optischen Anschluß einer Bildaufnahmeeinrichtung, beispielsweise einer Videokamera, an das okularseitige Ende eines endoskopischen Instrumentes. Sie weist mindestens ein in einer Halterung (10,11) geführtes optisches Bauelement (12-14), in der Regel eine Linsengruppe auf. Die Vorrichtung ist als hermetisch abgeschlossenes Optikmodul ausgebildet mit zwei Abschlußfenstern (17,18) an den Enden, von denen mindestens ein Abschlußfenster (17,18) eine nach außen hin im wesentlichen plane Abschlußfläche (20,21) aufweist, die in bezug zu einer Ebene (22) quer zur optischen Achse (8) der Vorrichtung schräggestellt ist. Hierdurch können störende Reflexe, die an Übergangsflächen stets entstehen, verringert werden, da diese Reflexstrahlen aus dem Strahlengang heraus abgelenkt werden.

## Beschreibung

Die Erfindung betrifft ein endoskopisches Instrument nach den im Oberbegriff des Anspruchs 1 aufgeführten Merkmalen sowie eine Vorrichtung zum optischen Anschluß einer Bildaufnahmeeinrichtung an das okularseitige Ende eines solchen endoskopischen Instrumentes nach den im Oberbegriff des Anspruchs 6 aufgeführten Merkmalen.

Letztgenannte Vorrichtungen werden eingesetzt, um endoskopische Instrumente mit Okular, die zum unmittelbaren Betrachten durch das menschliche Auge vorgesehen sind, auch zum Betrachten über eine elektronische Bildaufnahmeeinrichtung ohne bauliche Veränderungen umzurüsten. Eine solche Vorrichtung ist beispielsweise aus US-PS 4,413,278 bekannt. Die dort beschriebene Vorrichtung weist lediglich eine Linse auf, die in einer Halterung in Richtung der optischen Achse verschiebbar zwischen Okular und Kamera angeordnet ist. Solche einlinsigen Vorrichtungen genügen heutzutage den optischen Anforderungen in der Regel nicht mehr. Es werden heute in der Regel Baugruppen aus mehreren optischen Bauelementen, insbesondere Linsen, bestehend eingesetzt, um die gewünschte optische Anpassung und Korrektur zu erreichen. Doch auch solchen optischen Korrekturen sind Grenzen gesetzt, da die sonst übliche Vergütung zumindest dort nicht eingesetzt werden kann, wo es sich um von außen zugängliche Abschlußflächen handelt, denn solche Vorrichtungen müssen sterilisierbar sein, also auch den Sterilisationstemperaturen widerstehen können. Ohne solche Vergütungen bilden sich jedoch an den Übergängen von einem gasförmigen zum festen Medium unerwünschte Reflexionen aus, die die Bildqualität in ganz erheblichem Maße beeinflussen, insbesondere bei der Aufnahme durch eine elektronische Kamera.

Hiervon ausgehend liegt der Erfindung die Aufgabe zugrunde, eine gattungsgemäße Vorrichtung so auszubilden, daß diese vorerwähnten Reflexionen weitgehend unterdrückt werden, andererseits jedoch ein widerstandsfähiges und ohne Probleme sterilisierbares Adapterbauteil geschaffen wird, das gute optische Eigenschaften aufweist.

Erfindungsgemäß wird dies dadurch gelöst, daß die Vorrichtung als hermetisch abgeschlossenes Modul ausgebildet wird, so daß von den optischen Bauelementen lediglich die Außenflächen der beiden Abschlußfenster von außen zugänglich sind und mit der Außenatmosphäre in Verbindung stehen. Um die sonst bei einer solchen Konstruktion üblichen starken Reflexe zwischen den Fensterflächen zu vermeiden, wird zudem eine dieser nach außen weisenden Abschlußflächen in bezug zu einer Querebene zur optischen Achse der Vorrichtung schräggestellt. Durch diese Schrägstellung werden an den Grenzflächen die Lichtstrahlen nicht wie sonst üblich im wesentlichen parallel zur optischen Achse reflektiert, sondern derart schräg, daß sie zu großen Teilen auf die Seitenflächen der Halterung geworfen werden, wo sie absorbiert werden.

Eine besonders hohe Minderung der unerwünschten Reflexe erreicht man dann, wenn eine der nach außen weisenden Abschlußflächen der Fenster in einem Winkel von bevorzugt etwa 7,5 - 10° schräg zu einer Querebene zur optischen Achse angeordnet wird oder aber besser noch, wenn zwei Abschlußflächen in einem bevorzugten Winkel von 7,5 - 10° zu einer solchen Querebene schräg angeordnet werden, und zwar derart, daß sich die Winkel addieren, also die Abschlußflächen in entgegengesetzter Richtung schräggestellt sind. Auf diese Weise kann der durch eine Schrägstellung hervorgerufene Achsversatz kompensiert werden. Der Schrägstellungswinkel kann je nach Anforderung über den vorerwähnten Bereich hinausgehen. In der Praxis wird jedoch etwa bei 15° eine obere Grenze gegeben sein, während nach unten eine solche Grenze praktisch nicht festlegbar ist.

Einen ähnlichen Effekt erreicht man auch, wenn man anstelle des üblichen Okularfensters endoskopseitig eine schräggestellte Abschlußfläche vorsieht. Dabei hat sich gezeigt, daß auch in diesem Falle die Schrägstellung bevorzugt so erfolgen sollte, daß die nach außen weisende Abschlußfläche des Okularfensters in einem Winkel von 7,5 - bis 10° zu einer Querebene der optischen Achse schräggestellt ist. Die gegenüberliegende Abschlußfläche der Kupplungsvorrichtung kann in gleicher Weise schräggestellt sein, jedoch in entgegengesetzter Richtung zur Kompensation des Achsversatzes.

Bevorzugt werden bei der erfindungsgemäßen Vorrichtung Fenster eingesetzt, die als plane durchsichtige Scheiben ausgebildet sind, so daß eine solche Scheibe lediglich schräg gefaßt und mit der Vorrichtung verbunden werden muß. Es kann jedoch auch anstelle einer Scheibe eine Linse des optischen Systems entsprechend ausgebildet werden, nämlich plankonvex. Dann wird die Planfläche dieser Linse, die die Vorrichtung oder aber auch das Endoskop okularseitig abschließt an der nach außen weisenden Seite so geschliffen oder gefaßt, daß sich die vorbeschriebene Schrägstellung ergibt.

Um ein hermetisch dichtes Modul herzustellen ist es von besonderem Vorteil, wenn die Fenster nicht wie sonst üblich durch eine Dichtung oder durch Kleben mit der umschließenden Halterung verbunden sind, sondern wenn diese stoffschlüssig, beispielsweise durch Löten oder Schweißen damit verbunden werden, da sich nur hierdurch eine völlig zuverlässige langzeit-gasdichte Verbindung ergibt. Fertigungstechnisch sehr günstig kann es sein, wenn man das beispielsweise aus Saphir, Spinell, Yttrium-Aluminium-Granat oder auch Quarzglas bestehende Fenster durch Reibschweißen mit einem metallischen Rahmen verbindet, den man dann wiederum durch Schweißen oder Löten mit der übrigen Vorrichtung dicht und fest verbindet. Dieser Reibschweißprozeß ist im Vergleich zum Hochvakuumlöten fertigungstechnisch günstiger.

Um weiterhin eine optimale Anpassung zwischen Endoskopoptik und Kamera zu gewährleisten ist es von Vorteil, wenn das gesamte Optikmodul innerhalb einer zwischen Okular und Bildaufnahmeeinrichtung anbringbaren Halterung in Richtung seiner optischen Achse verschiebbar gelagert ist.

Die Erfindung ist nachfolgend anhand eines in der Zeichnung dargestellten Ausführungsbeispiels näher erläutet. Es zeigen:
- Fig. 1: in schematischer Darstellung den Strahlenverlauf eines Mittelstrahls sowie zweier Randstrahlen im Bereich zwischen okularseitigem Fenster eines Endoskops und einer Aufnahmeeinrichtung unter Verwendung eines optischen Adapters nach dem Stand der Technik,
- Fig. 2: in Darstellung nach Fig. 1 eine Ausführung, bei der das okularseitige Fenster schräggestellt ist,
- Fig. 3: in Darstellung nach Fig. 1 eine Ausführung, bei der die beiden Abschlußfenster des Optikadapters schräggestellt sind,
- Fig. 4: in stark vereinfachter Darstellung den okularseitigen Teil eines endoskopischen Instrumentes sowie eine Bildaufnahmeeinrichtung mit dazwischen angeordnetem Optikadapter in Schnittdarstellung und
- Fig. 5: das Optikmodul des optischen Adapters nach Fig. 4 in vergrößerter Schnittdarstellung.

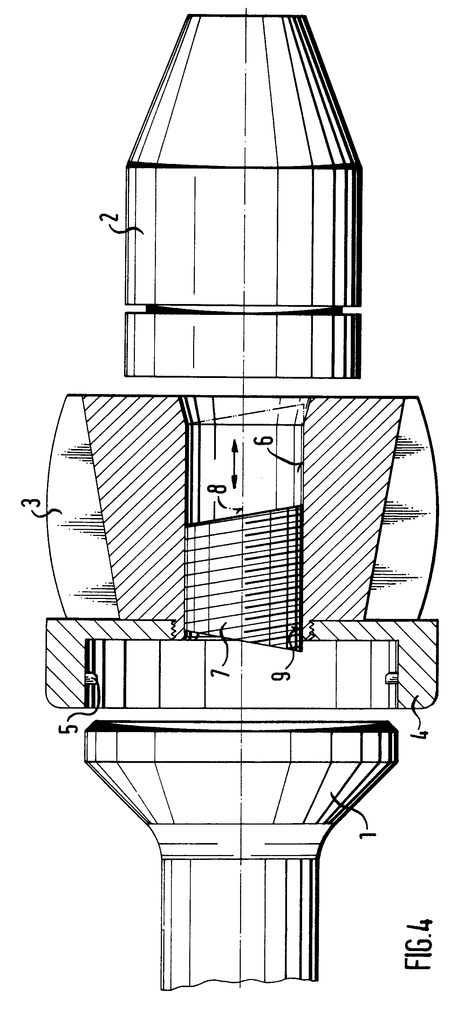

Die Fig. 4 zeigt den okularseitigen Teil 1 eines endoskopischen Instrumentes sowie eine daran anzuschließende Bildaufnahmeeinrichtung 2 in Form einer elektronischen Videokamera. Um die Endoskopoptik, die wie anhand des Okulars 1 erkennbar, üblicherweise zum direkten Betrachten durch das menschliche Auge ausgelegt ist, zur Wiedergabe mittels der Videokamera 2 anzupassen, ist ein Adapter 3 zwischen dem okularseitigen Teil 1 und der Bildaufnahmeeinrichtung 2 vorgesehen, der zum einen eine mechanische Verbindung zwischen den Teilen 1 und 2 sowie insbesondere eine optische Anpassung ermöglicht.

Zur mechanischen Verbindung weist der Adapter 3 einen das Okular 1 übergreifenden Anschlußteil 4 auf, mit dem der Adapter 3 in definierter Lage zum Okular 1 lösbar an diesem befestigt werden kann. Dabei sind innerhalb des Anschlußteiles 4 Vorsprünge 5 vorgesehen, die durch eine entsprechende, hier nicht dargestellte Mechanik gegen Federkraft zurückziehbar sind, und die den Anschlußteil 4 formschlüssig auf dem Okular 1 halten. Eine entsprechende Verbindung besteht zwischen dem Adapter 3 und der Bildaufnahmeeinrichtung 2. Sie ist jedoch nicht im einzelnen dargestellt, derartige Verbindungen sind hinlänglich bekannt und werden dem Anforderungsprofil entsprechend ausgebildet. Es sei in diesem Zusammenhang nur auf die zahlreichen Bajonett- und anderen lösbaren Verbindungen beispielsweise aus der foto-optischen Technik hingewiesen.

Innerhalb einer zentralen Durchgangsbohrung 6 des Adapters 3 ist ein Optikmodul 7 in Richtung der optischen Achse 8 des Adapters verstellbar gelagert. Hierzu weist das Optikmodul 7 über seinen zylindrischen Außenumfang ein Außengewinde 9 auf, das im Eingriff mit einem Innengewinde einer nicht dargestellten, innerhalb des Adapters 3 drehbar gelagerten Rändelmutter im Eingriff steht. Hierdurch ist eine präzise Ausrichtug des Optikmoduls 7 in Richtung seiner optischen Achse 9 innerhalb des Adapters 3 möglich, um die zu verbindenden optischen Instrumente aufeinander abzustimmen.

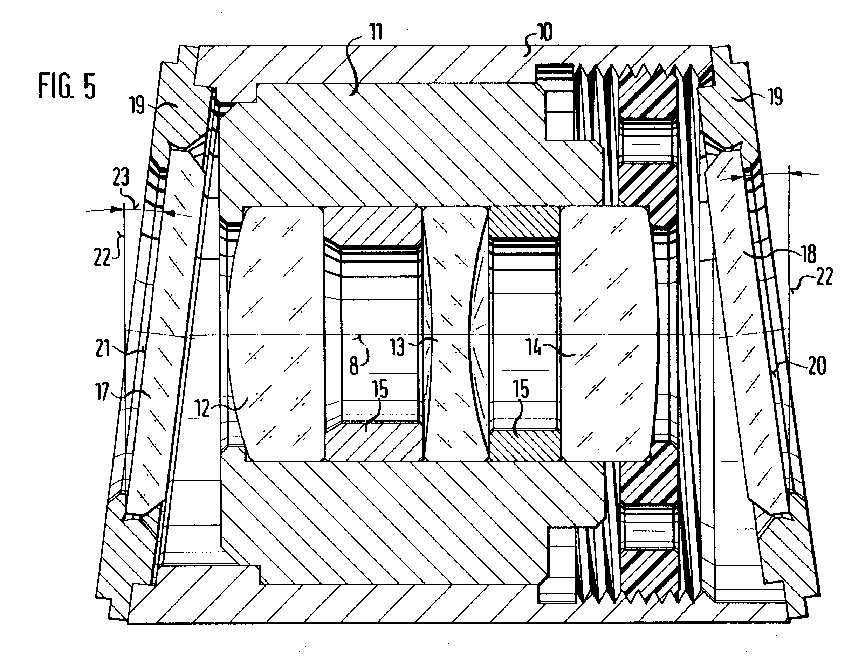

Anhand von Fig. 5 ist der Aufbau dieses nach außen hermetisch abgeschlossenen Optikmoduls 7 dargestellt.

Das Optikmodul 7 weist einen im wesentlichen zylindrischen Tragkörper 10 auf, der das vorerwähnte Außengewinde 9 trägt. Innerhalb dieses Tragkörpers sitzt die eigentliche Optikaufnahme 11, in deren zentraler Durchgangsbohrung die optischen Bauelemente 12 bis 14 unter Eingliederung von Abstandshülsen angeordnet sind. Die optischen Bauelemente bestehen in der vorliegenden Ausführungsform aus einer Plankonvexlinse 12, einer Bikonkavlinse 13 sowie einer Plankonvexlinse 14. Sie werden zusammen mit der Optikaufnahme 11 mittels eines Gewinderinges 16, der mit einem entsprechenden Gewinde im Tragkörper 10 im Eingriff steht, in diesem festgelegt. Weitere Einzelheiten der Konstruktion ergeben sich aus Fig. 5.

An den schräg verlaufenden Stirnseiten des Tragkörpers 10 sind Fenster 17 und 18 stoffschlüssig eingegliedert. Die Fenster 17 und 18 bestehen aus planparallelen Scheiben, beispielsweise aus Saphir, Spinell oder Yttrium-Aluminium-Granat, die durch Reibschweißung mit dem sie haltenden und umgebenden Metallrahmen 19 stoffschlüssig und völlig dicht verbunden sind. Anstelle der Reibschweißverbindung kann auch eine Hochvakuumlötverbindung oder andere geeignete Stoffschlußverbindung vorgesehen sein. Die Metallrahmen wiederum sind an den schräg verlaufenden Stirnseiten des Tragkörpers 10 angeschweißt, so daß sich ein vollständig dicht abgeschlossenes Optikmodul ergibt. Durch entsprechende Werkstoffwahl der Fenster 17 und 18 können zudem extrem widerstandsfähige Abschlußflächen 20 und 21 gebildet werden, die nicht nur jedem Sterilisationsvorgang ohne weiteres widerstehen, sondern auch mechanischen Einflüssen standhalten.

Um die bei sonst üblichen quer zur optischen Achse 8 ausgerichteten Fenstern auftretenden störenden Reflexionen weitgehend zu vermeiden, sind bei der vorliegenden Ausführung beide Fenster 17 und 18 so schräggestellt angeordnet, daß ihre äußeren Abschlußflächen 20 und 21 zu einer quer zur optischen Achse 8 verlaufenden Ebene 22 in einem Winkel 23 von etwa 8,5° stehen. Und zwar erfolgt die Ausrichtung so, daß der Winkel 23 zwar auf beiden Seiten dem Betrag nach gleich ist, sich jedoch in seiner Richtung unterscheidet, so daß die Abschlußflächen 20 und 21 insgesamt einen Winkel von 17° mit der Ebene 22 einschließen.

Zur Verminderung von Reflexionen kann anstelle der vorbeschriebenen Schrägstellung beider Abschlußflächen 20 und 21 auch nur eine der Abschlußflächen schräggestellt werden. Auch kann anstelle einer zweiten schräggestellten Abschlußfläche am Optikmodul 7 eine entsprechend schräggestellte Abschlußfläche am Okular 1 vorgesehen sein, wobei auch dann das Okular 1 und das Optikmodul 7 so auszurichten sind, daß sich die Winkel, in denen die zueinanderweisenden Abschlußflächen zur Querebene 23 stehen, addieren.

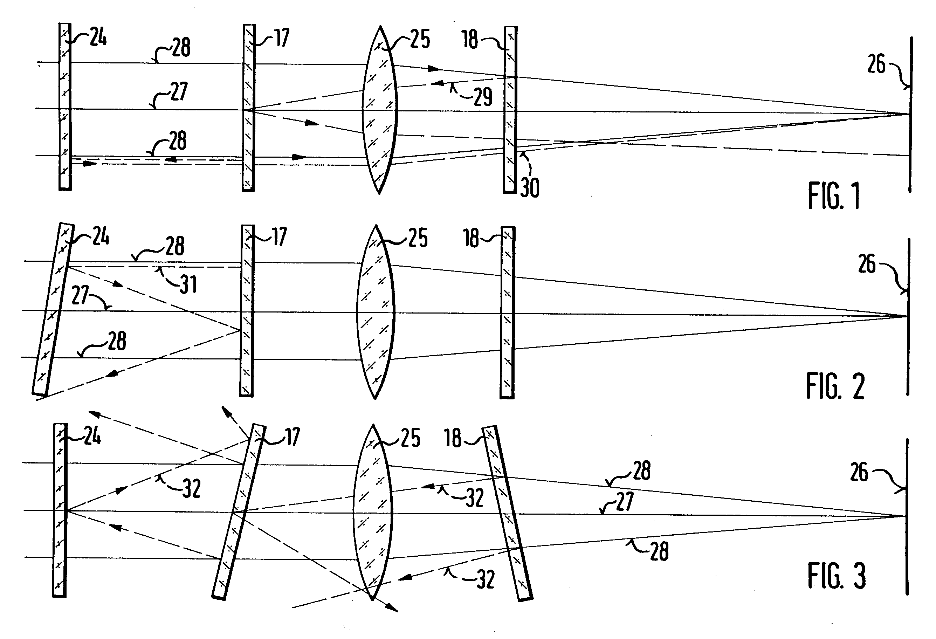

Anhand der Fig. 1 bis 3 sei nachfolgend das Wirkprinzip der Erfindung verdeutlicht:
In den Fig. 1 bis 3 ist das okularseitige Fenster des okularseitigen Teils 1 mit 24 gekennzeichnet, die Fenster des Optikmoduls entsprechend der Darstellung nach Fig. 5 mit 17 und 18. Die optischen Bauelemente werden durch eine Linse 25 repräsentiert. Mit 26 ist die kameraseitige Aufnahmeebene der Bildaufnahmeeinrichtung bezeichnet. Zur Verdeutlichung des Strahlengangs sind ein Zentralstrahl 27 sowie zwei Randstrahlen 28 dargestellt.

In Fig. 1 ist beispielhaft durch die Pfeillinien 29 sowie die unterbrochenen Linien 30 dargestellt, wie durch Teilreflexionen auf Übergangsflächen zwischen dem gasförmigen Umgebungsmedium und dem Fenster Reflexe entstehen, die später in der Aufnahmeebene 26 sichtbar sind.

In den Fig. 2 und 3 ist anhand beispielhaft eingezeichneter Strahlen, die durch die Pfeillinien 31 bzw. 32 repräsentiert werden, dargestellt, wie durch Schrägstellung der Abschlußflächen bzw. der gesamten Fenster solche Reflexionen zumindest soweit vermindert werden, daß sie in der Aufnahmeebene 26 nicht auftauchen. Bei der Darstellung nach Fig. 2 ist nur das okularseitige Fenster 24 schräggestellt, bei der Darstellung nach Fig. 3 hingegen sind beide Abschlußfenster 17 und 18 des Optikmoduls 7 des optischen Adapters 3 schräggestellt, so wie es der Ausführung gemäß Fig. 5 entspricht. Man sieht deutlich, daß durch die Schrägstellung der Teil des Lichtes, der unerwünschterweise reflektiert wird, in eine Richtung außerhalb der mit dem Zentralstrahl 27 übereinstimmenden optischen Achse des Systems weist, so daß diese Strahlen auf die in der Regel mattierten und somit absorbierenden Innenflächen beispielsweise der Optikaufnahme 7 oder des Tragkörpers 10 fallen.

### Bezugszeichenliste

- 1: Okularseitiges Teil eines endoskopischen Instrumentes
- 2: Bildaufnahmeeinrichtung
- 3: Adapter
- 4: Anschlußteil
- 5: Vorsprünge
- 6: Durchgangsbohrung
- 7: Optikmodul
- 8: Optische Achse von 3/7
- 9: Außengewinde
- 10: Tragkörper
- 11: Optikaufnahme
- 12: Plankonvexlinse
- 13: Bikonkavlinse
- 14: Plankonvexlinse
- 15: Abstandshülsen
- 16: Gewindering
- 17: Fenster
- 18: Fenster
- 19: Metallrahmen
- 20: Abschlußfläche
- 21: Abschlußfläche
- 22: Ebene
- 23: Winkel
- 24: okularseitiges Fenster
- 25: Linse
- 26: Aufnahmeebene
- 27: Zentralstrahl, optische Achse des Systems
- 28: Randstrahlen
- 29: Pfeillinien in Fig. 1
- 30: Unterbrochene Linien in Fig. 1
- 31: Pfeillinien in Fig. 2
- 32: Pfeillinien in Fig. 3

## Patentansprüche

1. Endoskopisches Instrument mit einem Schaft und darin angeordneten optischen Bauelementen, sowie mit mindestens einem den Schaft zumindest teilweise abschließenden Fenster (24) mit nach außen hin im wesentlichen planer Abschlußfläche, dadurch gekennzeichnet, daß die Abschlußfläche in bezug zu einer Ebene (22) quer zur optischen Achse (27) des Instruments schräggestellt ist.

2. Endoskopisches Instrument nach Anspruch 1, dadurch gekennzeichnet, daß die Abschlußfläche des okularseitigen Fensters (24) schräggestellt ist.

3. Endoskopisches Instrument nach Anspruch 1 oder 2, dadurch gekennzeichnet, daß das Fenster (24) durch eine planparallele durchsichtige Scheibe gebildet ist.

4. Endoskopisches Instrument nach Anspruch 1 oder 2, dadurch gekennzeichnet, daß das Fenster durch eine plankonvexe Okularlinse gebildet ist, deren Planfläche schräggestellt angeordnet ist.

5. Endoskopisches Instrument nach einem der vorhergehenden Ansprüche, dadurch gekennzeichnet, daß die Schrägstellung der nach außen weisenden Abschlußfläche des Fensters in einem Winkel von 7,5 bis 10 Grad zu einer Ebene (22) quer zur optischen Achse (27) erfolgt.

6. Vorrichtung zum optischen Anschluß einer Bildaufnahmeeinrichtung (2) an das okularseitige Ende (1) eines endoskopischen Instrumentes mit mindestens einem in einer Halterung (10, 11) geführten optischen Bauelement (12 - 14), insbesondere einer Linse, dadurch gekennzeichnet, daß die Vorrichtung als hermetisch abgeschlossenes Modul (7) ausgebildet ist und zwei Abschlußfenster (17, 18) aufweist, von denen mindestens eines eine nach außen hin im wesentlichen plane Abschlußfläche (20, 21) aufweist, die in bezug zu einer Ebene (22) quer zur optischen Achse (8) der Vorrichtung schräggestellt ist.

7. Vorrichtung nach Anspruch 6, dadurch gekennzeichnet, daß die Fenster (17, 18) als plane durchsichtige Scheiben ausgebildet sind.

8. Vorrichtung nach einem der vorhergehenden Ansprüche, dadurch gekennzeichnet, daß ein Fenster durch eine plankonvexe Linse gebildet ist, deren Planfläche schräggestellt ist.

9. Vorrichtung oder Instrument nach einem der vorhergehenden Ansprüche, dadurch gekennzeichnet, daß das oder die Fenster (17, 18) durch Reibschweißen stoffschlüssig mit einem metallischen Rahmen (19) verbunden sind, der in der Vorrichtung bzw. dem Instrument eingegliedert ist.

10. Vorrichtung nach einem der vorhergehenden Ansprüche, dadurch gekennzeichnet, daß die nach außen weisende Abschlußfläche (20, 21) eines Fensters (17, 18) der Vorrichtung in einem Winkel (22) von 7,5 bis 10 Grad zu einer Ebene (22) quer zur optischen Achse (8) der Vorrichtung schräggestellt ist.

11. Vorrichtung nach einem der vorhergehenden Ansprüche, dadurch gekennzeichnet, daß die nach außen weisenden Abschlußflächen (20, 21) beider Fenster schräggestellt sind, und zwar in einem Winkel (23) von 7,5 bis 10 Grad zu einer Ebene (22) quer zur optischen Achse (8) der Vorrichtung, wobei die Ausrichtung so erfolgt, daß die Abschlußflächen (20, 21) in entgegengesetzter Richtung schräggestellt sind.

12. Vorrichtung nach einem der vorhergehenden Ansprüche, dadurch gekennzeichnet, daß das Optikmodul (7) innerhalb einer zwischen Okular (1) und Bildaufnahmeeinrichtung (2) anbringbaren Halterung (3) in Richtung seiner optischen Achse (8) verschiebbar gelagert ist.
